# EUROPÄISCHE PATENTANMELDUNG

(11) **EP 3 852 067 A1**
(43) Veröffentlichungstag der Anmeldung: **21.07.2021**
(21) Anmeldenummer: 20152311.5
(22) Anmeldetag: 16.01.2020
(51) Int. Cl.: G06T 11/00, G06T 7/00

(54) **3D-MODEL TRAINING**

(71) Anmelder: Deutsche Telekom AG, 53113 Bonn (DE)
(72) Erfinder: PHAN, René, 10437 Berlin (DE); ELSS, Yannick, 10967 Berlin (DE)
(74) Vertreter: Vossius & Partner Patentanwälte Rechtsanwälte mbB

(57) **Zusammenfassung**

Durch die Erfindung wird ein Computer-implementiertes Verfahren zum Trainieren eines Modells zur Bilderkennung von computergestützt entwickelten Teilen, insbesondere in industriellen Prozessen bereitgestellt. Zunächst werden digitale Abbildungsdaten eines Teils bereitgestellt, die bei der computergestützten Entwicklung des Teils erzeugt werden. Diese digitalen Abbildungsdaten werden zum Erzeugen von Trainingsdaten des Teils verwendet. Den so erzeugten Trainingsdaten werden Labels zugeordnet. Mit den erzeugten und gelabelten Trainingsdaten wird dann ein Modell trainiert.

## Beschreibung

Die vorliegende Erfindung betrifft das Trainieren und insbesondere das Bereitstellen von Trainingsdaten für das Training von Modellen zur Bilderkennung.

Künstliche Intelligenz (KI) bietet großes Potential für eine weitere Automatisierung von Aufgaben, die bisher nur von Menschen durchgeführt werden konnten. Der Mensch ist bis heute für viele Aufgaben unersetzlich, aufgrund seiner Sinne (Sehen, Hören, Fühlen, etc.) und der Fähigkeit Informationen, die mit Hilfe der Sinne aufgenommen wurden, zu verknüpfen und Schlüsse zu ziehen. Methoden der KI gepaart mit besser und günstiger werdender Sensorik bieten heutzutage die Möglichkeit einige Sinne digital sehr gut und manchmal besser nachzuempfinden bzw. abzubilden.

Vor allem das Sehvermögen des Menschen ist in sehr vielen industriellen Prozessen wichtiger Bestandteil. Beispielhaft können Assembly-Prozesse, Disassembly-Prozesse, Prozesse zur optischen Qualitätsüberprüfung, Lagerprozesse, Kommissionierprozesse oder Wartungsprozesse verbauter Teile bzw. Komponenten genannt werden. Bilderkennung mittels KI ist somit ein sehr wichtiges Teilgebiet geworden.

Es wurden in verschiedenen Projekten Modelle zur Bilderkennung entwickelt, insbesondere für folgende übergeordnete Aufgabenbereiche, um verschiedene Industrieprozesse umzusetzen. Es können auch jede Kombinationen von Prozessen/Aufgabenfeldern umgesetzt werden.

Diese Aufgabenfelder umfassen beispielsweise:
- Image Classification
   Unterscheidung von Objekten auf Bildern (Typ, Art, Teil)
- Object Detection:
   Erkennung der Bezeichnung des Teils und dessen Position auf dem Bild
   Die Position auf dem Bild wird durch eine sogenannte Bounding Box beschrieben (Koordinaten, die einen Rahmen um einen Bildausschnitt beschreiben)
- Erkennung von Qualitätsmerkmalen von Objekten (Optical Quality Control):
   Klassifizierung In-Order/Not-In-Order-Teile (iO/niO)
   Detektion von Defekten bzw. Veränderungen jeglicher Art, deren Positionierung und Größe

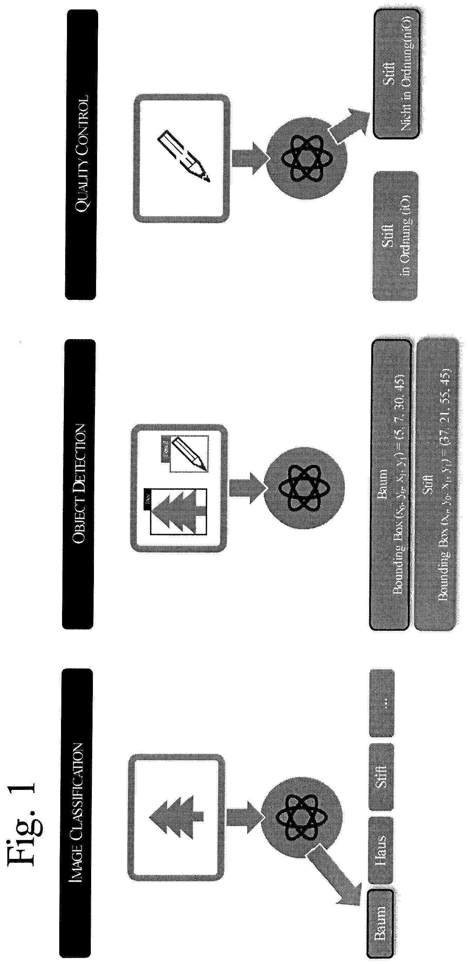

Diese verschiedenen Aufgabenfelder in der Bilderkennung sind schematisch in Figur 1 gezeigt.

Bei der Erstellung von KI-Modellen zur Bewältigung der genannten Aufgaben werden LernVerfahren benutzt, wobei die Modelle unter Verwendung von Bildern der zu erkennenden Teile trainiert werden. Insbesondere kann sog. Transfer-Learning genutzt werden. Hierbei werden bewährte Deep Learning Modell-Architekturen (Base-Models) für neue Aufgaben umtrainiert bzw. umgelernt. Diese Lernverfahren zählen zur Klasse der Supervised Learning Verfahren. Dies bedeutet, dass sogenannte gelabelte Daten vorhanden sein müssen. In dem hier betrachteten Fall sind dies Bilder mit den jeweiligen Labels, wobei Labels Beschreibungen sind, die angeben, um welche Objekte, Positionen und/oder Fehlerbilder es sich handelt.

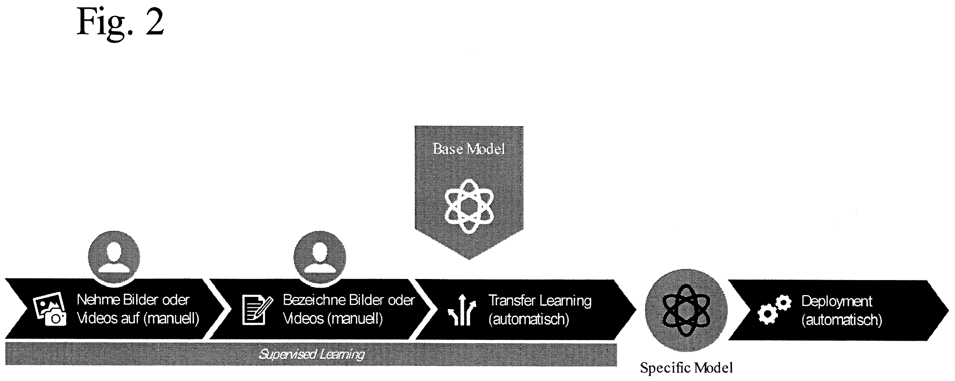

Ein solches bekanntes Verfahren ist schematisch in Figur 2 gezeigt. Zunächst werden Trainingsbilder - in der Regel manuell - aufgenommen und - ebenfalls manuell - gelabelt. Eine Modellarchitektur (Base Model) wird dann automatisch mit den erstellten und gelabelten Trainingsbildern unter Verwendung eines Supervised Learning-Verfahrens trainiert und damit ein auf die spezifische Aufgaben trainiertes Modell (Specific Model) erhalten. Dieses Modell wird dann für den Einsatz für die gestellte Aufgabe vorbereitet (Deployment).

Aufgrund der sehr großen Menge an Parametern der Modell-Architekturen (mehrere Millionen, je nach Modell-Architektur) ist es notwendig auf entsprechend großen Datenmengen zu trainieren, um viele Objekte möglichst optimal zu erkennen. Heutzutage werden Trainingsdaten mit sehr hohen manuellen Aufwänden aufgenommen. In der Regel werden reale Teile manuell abgefilmt und anschließend manuell beschrieben (gelabelt). Viele Unternehmen haben allerdings viele tausende Objekte, Ausführungen oder mögliche Qualitätsfehler.

Bei den derzeit verwendeten Verfahren bestehen Probleme hinsichtlich der notwendigen großen Anzahl an Trainingsbildern. Insbesondere ist das manuelle Aufnehmen in Form von Bild- bzw. Videoaufnahmen von Objekten mit einem sehr hohen Aufwand, insbesondere Zeitaufwand verbunden und fehleranfällig. Weiterhin wird auch das Labeln der Daten in der Regel manuell durchgeführt und ist entsprechend (zeit)aufwändig und fehleranfällig. Dies gilt insbesondere für Use Case Object Detection.

Vor allem die Erkennung qualitativer Fehler scheitert häufig an der Anzahl vorhandener Daten zu den Fehlerbildern (beispielsweise Kratzer auf Lack, Dellen im Metall). Viele Fehlerbilder sind nicht so oft oder nur unter bestimmten Bedingungen reproduzierbar. Dies führt zu weiteren Material- und Prozesskosten. Das Generieren dieser Daten in der Realität bedeutet oft absichtliches Produzieren von Fehlern bzw. Ausschüssen, was zusätzliche Kosten und Aufwände verursacht.

Die für das Deep Learning benötigten Umfänge und Heterogenität der Daten wird in Realität bisher nur selten erreicht. Diese Probleme erschweren den breiten Einsatz solcher Technologien häufig. Durch anfänglich geringe Datenmengen ist die Güte der Modelle meist nicht optimal. Dadurch entstehen Akzeptanzprobleme bei der Belegschaft aufgrund nicht optimaler Modelle und hoher Entwicklungskosten.

Die Lösung zumindest eines dieser Probleme ist daher Aufgabe der Erfindung. Die Aufgabe wird durch die Merkmale der Patentansprüche gelöst.

Durch die Erfindung wird ein Computer-implementiertes Verfahren zum Trainieren eines Modells zur Bilderkennung von computergestützt entwickelten Teilen, insbesondere in industriellen Prozessen bereitgestellt. Zunächst werden digitale Abbildungsdaten eines Teils bereitgestellt, die bei der computergestützten Entwicklung des Teils erzeugt werden. Ein solches Teil kann ein Einzelteil, eine aus mehreren Einzelteilen zusammengesetzte Baugruppe oder auch ein ganzes Bauteil oder Produkt sein. Diese digitalen Abbildungsdaten werden zum Erzeugen, insbesondere Rendern von Trainingsdaten des Teils verwendet. Den so erzeugten Trainingsdaten werden automatisiert durch das Verfahren Labels zugeordnet. Mit den erzeugten und gelabelten Trainingsdaten wird dann ein Modell trainiert. Dies kann insbesondere durch ein Supervised Learning Verfahren geschehen.

Die digitalen Abbildungsdaten können digital erzeugte Abbilder des Teils, insbesondere CAD-Daten, Konstruktionsdaten und/oder 3D-Daten des Teils sein.

Die digitalen Abbildungsdaten können nebst Industrieteile auch weitere Repräsentation darstellen, beispielsweise Gebäude, Menschen, Tiere, Fortbewegungsmittel, Organe. Darüber Hinaus sind auch hier Simulationen jeglicher Art denkbar, sodass diese Veränderungen eines Normalzustands als Ausgangsbasis zur Erzeugung von Trainingsdaten für Modelle des maschinellen Lernens genutzt werden können.

Das Erzeugen der Trainingsdaten kann das Einfügen einer Abbildung des Teils in eine oder mehrere Szenen und/oder das automatisierte Verarbeiten der digitalen Abbildungsdaten aufweisen. Die Szene kann eine vorbestimmte Eigenschaft aufweisen, wie eine vorbestimmte Umgebung, eine vorbestimmte Beleuchtung, eine vorbestimmte Helligkeit, einen Hintergrund, zusätzliche, gegebenenfalls reflektierende Objekte, eine vorbestimmte Kameraeinstellung, wie Schärfe oder Auflösung, Nebel, Regen, Schnee und/oder Dampf.

Das Erzeugen der Trainingsdaten kann ferner das Erzeugen einer Abbildung des Teils unter Veränderung mindestens eines Parameters und/oder einer Eigenschaft, wie einer Farbe, eines Materials und/oder einer Größe aufweisen, so dass also das Teil mit der gewünschten Eigenschaft, also einer vorbestimmten Farbe, in einem vorbestimmten Material und/oder einer vorbestimmten Größe abgebildet wird. Die erzeugte Abbildung des Teils kann das abgebildete Teil teilverdeckt zeigen.

Es können ein oder mehrere Bilder und/oder Videos des Teils erzeugt bzw. gerendert werden.

Das Erzeugen der Trainingsdatenkann das Verändern der Abbildung des Teils zu Darstellung einer Veränderung des Teils, insbesondere einer unregelmäßigen Veränderung aufweisen. Eine solche Veränderung kann jegliche Art von Veränderung des Normalzustands bzw. Sollzustands des Aufbaus und/oder der Struktur des Teils einschließen, beispielsweise eine Beschädigung des Teils, wie eine Delle, einen Kratzers, eine Kerbe, einen Grat, eine Verformung und/oder eine ungleichmäßige Oberfläche.

Die den Trainingsdaten zugeordneten Labels können eine Beschreibung des Teils und/oder dessen Eigenschaften aufweisen, wie eine Bezeichnung oder eine Identifikationsnummer des Teils, die Farbe oder das Material des Teils und/oder das Vorhandensein und/oder die Bezeichnung einer Veränderung, beispielsweise einer Beschädigung des Teils.

Das Trainieren des Modells kann eine Pipeline unter Verwendung von Transfer-Learning aufweisen.

Das erfindungsgemäße Verfahren kann ferner das Evaluieren des Modells, beispielsweise gegen unabhängige Testbilder aufweisen.

Dem Verfahren kann sich ferner der Schritt des Deployment des trainierten Modells anschließen.

Das durch das erfindungsgemäße Verfahren trainierte Modell kann zum Klassifizieren von Abbildungen des Teils, zum Erkennen des Teils, dessen Position und/oder dessen Eigenschaft auf Bildern und/oder zum Überwachen der Qualität von hergestellten Teilen durch Erkennen einer Veränderung, deren Positionierung und/oder deren Größe verwendet werden.

Die vorliegende Erfindung wird nun unter Verweis auf die Figuren näher erläutert. Es zeigen
- Figur 1: schematisch verschiedene Anwendungen von Modellen zur Bilderkennung;
- Figur 2: schematisch ein Verfahren zum Trainieren eines Basis-Modells;
- Figur 3: schematisch ein Verfahren zum Trainieren eines Modells zur Bilderkennung nach einer Ausführungsform der vorliegenden Erfindung; und
- Figur 4: schematisch das Erzeugen von gelabelten Trainingsdaten zur Verwendung in einem Verfahren gemäß einer Ausführungsform der vorliegenden Erfindung.

Im Bereich der Entwicklungsphase von Produkten wird die Konstruktion von Teilen heutzutage in der Regel digital durchgeführt. Als Ergebnis entstehen Konstruktionsdaten, die digitale Abbilder darstellen, beispielsweise in der Form von Konstruktionsdaten oder 3D-Daten, die gemäß der vorliegenden Erfindung dafür genutzt werden, um Trainingsbilder für Use Cases, beispielsweise die in der Einleitung beschriebenen Anwendungsgebielte, digital zu erzeugen.

Bei dieser Erstellung werden automatisiert zudem Labels für Supervised Learning Ansätze erzeugt. Trainingsbilder und Labels werden so abgespeichert, dass diese in einer automatisierten Pipeline u.a. zum Transfer-Learning verschiedener Modellarchitekturen genutzt werden können. Durch das digitale Erzeugen können Trainingsdaten in beliebiger und benötigter Menge, Variabilität und Ausführung erstellt werden.

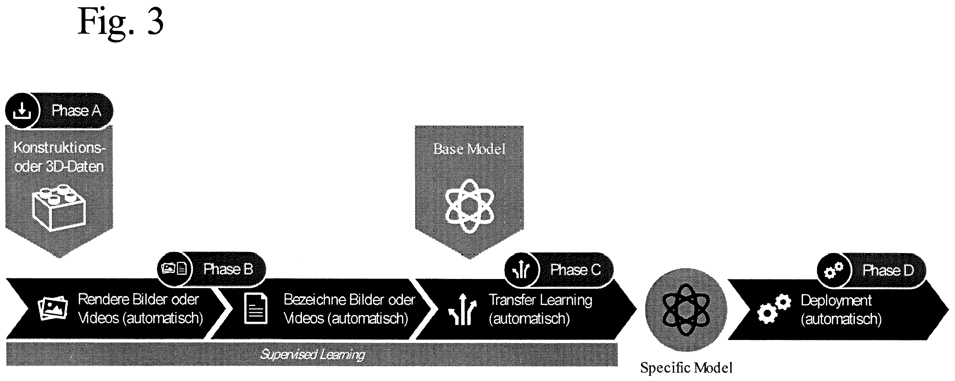

Verschiedene Phasen einer Ausführungsform der vorliegenden Erfindung werden nun beispielhaft anhand der Figur 3 beschrieben. Das in Figur 3 dargestellte Trainingsverfahren umfasst insbesondere die Phasen bzw. Schritte:
- A: Bereitstellung von Konstruktionsdaten
- B: Erzeugung von Trainingsdaten
- C: Training von Modellen und gegebenenfalls
- D: Deployment der Modelle

Dieser Ansatz ermöglicht eine komplette Automatisierung aller Prozesse direkt nach Bereitstellung der Daten

### Phase A: Bereitstellung von Konstruktionsdaten

Zunächst werden allgemein digitale Abbilder der zu erkennenden Teile bereitgestellt. Hiermit sind Daten gemeint, die das Teil elektronisch charakterisieren und im Entwurf oder in der Konstruktion des Teils erzeugt oder verwendet werden. Insbesondere sind dies Konstruktionsdaten, wie beispielsweise CAD-Daten der Teile, oder andere 3D-Daten, die die Gestalt des Teils in geeigneter Weise beschreiben. Hierbei können alle gängigen 3D-Formate bzw. Konstruktionsdatenformate verwendet werden.

Die Daten können über eine gesicherte Schnittstelle, gegebenenfalls inklusive eines Upload-Interfaces, über ein Austauschlaufwerk oder einen anderen physikalischen Speicher bereitgestellt werden.

In der Praxis können in einem Datenverzeichnis alle ein bestimmtes Teil betreffenden Daten in einem übergeordneten Ordner gebündelt werden. Die Benamung der einzelnen Teile kann über die Auswahl des jeweiligen Dateinamens erfolgen oder wahlweise auch in einer weiteren beschreibende Datei, beispielsweise im *.csv Format.

### Phase B: Erzeugung von gelabelten Trainingsdaten

Es ist eine Grundidee der vorliegenden Erfindung, 3D-Software zum Rendering von Trainingsdaten aus Konstruktionsdaten zu nutzen. Aus diesen konstruktionsbezogenen Daten werden dann mittels Software-Verfahren vorzugsweise automatisiert Trainingsbilder erzeugt. Hierzu wird aus den Konstruktionsdaten ein 3D-Bild des entsprechenden Teils bzw. Objekts erzeugt. Dieses 3D-Bild kann dann entweder direkt als Trainingsbild verwendet werden, oder in eine oder mehrere Szenen eingefügt werden. Weiterhin oder zusätzlich können dem Objekt hierbei Eigenschaften gegeben werden, die auch variiert werden können. Beispiele hierfür sind Größe, Farbe oder Material. Außerdem kann das Teil unter verschiedenen Blickwinkeln abgebildet werden, was durch automatisiertes und kontrolliertes Verschieben des Objekts und/oder der Kamera in der Szene, beispielsweise durch die Simulation einer Kamerafahrt, erreicht werden kann. In jeder Szene können ferner wahlweise weitere Eigenschaften der Szene variiert werden, um die Heterogenität der Daten zu erhöhen. Beispiele hier sind Art und Positionierung von Lichtquellen, Helligkeiten, Hinter- und Untergründe, Reflektierende Elemente, Kameraeinstellungen (Schärfe, Auflösung, etc.), Nebel, Regen, Schnee, Dampf, Teilverdeckungen.

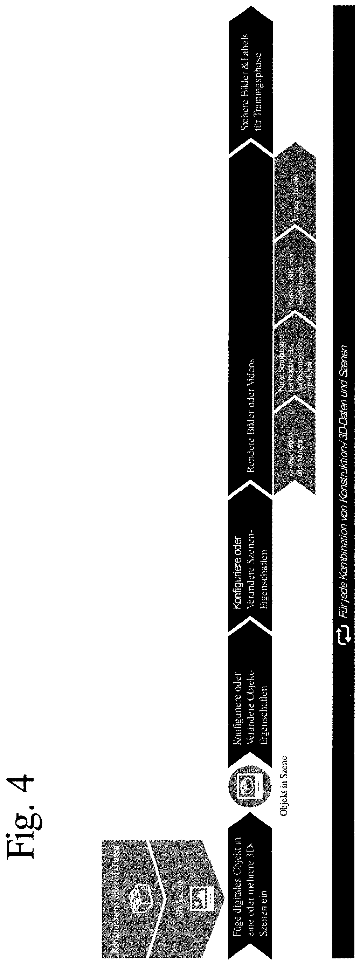

So wird eine Vielzahl von Bildern und/oder Videos mit dem jeweiligen Teil, also beispielsweise der Einzelteile, der Baugruppe oder dem Bauteil oder Produkt gerendert, die dann als Trainingsdaten verwendet werden können. Ferner können die Bilder und/oder Videos auch mehrere der genannten Teile gleichzeitig, beispielsweise in einer Szene, darstellen. Verschiedenen in dieser Phase B durchführbare Möglichkeiten zur Erzeugung unterschiedlicher Trainingsbilder sind schematisch in Figur 4 gezeigt.

Die Erzeugung von Trainingsdaten aus Konstruktionsdaten oder 3D-Daten ist nicht auf das Rendern von Bildern und/oder Videos eingeschränkt. Darüber hinaus kann dies in Echtzeit so passieren, dass ein Modell direkt auf Informationen oder Daten einer entsprechenden 3D- oder Konstruktions-Engine trainiert wird.

Die Bilder und/oder Videos werden so abgespeichert, dass sie automatisch so gelabelt werden, dass diese automatisiert weiterverarbeitet werden können. So kann einem Trainingsbild nicht nur die Bezeichnung oder eine mit dem jeweiligen Teil in Verbindung stehende Identifikation zugeordnet werden, sondern auch weitere Informationen, die im folgenden Trainingsvorgang eine Rolle spielen. Beispiele hierzu sind die erzeugte Farbe oder Material des Teils. Beispielsweise können, je nach Implementierung, die Trainingsbilder bzw. -videos folgendermaßen gelabelt werden:
- Image Classification
   Alle zu einem Teil gehörenden Bilder/Videos werden in einem Ordner mit der Benamumg des Teils gespeichert.
- Object Detection
   Alle Bilder aller Objekte werden in einem Ordner gespeichert. Zu jedem Bild wird zusätzlich eine Label-Datei mit den Objektname(n) sowie deren Bounding Box(en) gespeichert.
- Quality Control
   Die Bilder eines Teils werden in einem Ordner gespeichert, es ist also ein Ordner pro Teil vorgesehen. Die jeweiligen Ordner enthalten Teilordner mit der Klassifikation iO/niO (in Ordnung/nicht in Ordnung).
   Alternativ können alle Bilder pro Teil in einem Ordner gespeichert werden, wobei zusätzlich eine Beschreibung des Defekts oder der Veränderung und dessen Positionierung durch Label-Dateien pro Bild vorgesehen sind.

Um Trainingsbilder zu generieren, die verschiedene Arten von Beschädigungen oder Veränderungen des Objekts zeigen, kann digital simulierte Physik zur Erstellung bzw. Simulation von Beschädigungen genutzt werden. So können durch eine Nutzung von Physik-Engines, beispielsweise von Computerspielen bzw. Entwicklungsumgebungen wie Unity, Beschädigungen beliebig variabel digital simuliert werden, wie zum Beispiel Dellen, Kratzer, Kerben, Grate, Verformungen oder ungleichmäßige Oberflächen. Diese werden dann ebenso gerendert und gelabelt, und können dann als Trainingsdaten für die Erkennung der jeweiligen Beschädigung verwendet werden.

### Phase C: Training von Modellen

Das Training von Modellen kann auf unterschiedlichen Weisen durchgeführt werden. Eine Implementierung kann insbesondere eine automatisierte Pipeline, beispielsweise unter Nutzung von Transfer-Learning vorsehen. Die Daten können auch in verschiedene Sets eingeteilt werden, wodurch das Modell mit einem der Sets trainiert, mit einem, von diesem ersten Set unabhängigen Set validiert wiederum mit einem weiteren Set getestet werden kann.

Ferner können verschiedene Modellarchitekturen und/oder Transfer- Pipelines verwendet werden.

Lernfortschritte werden vorzugsweise auf dem Validation Set überwacht, wobei bevorzugt das Konvergenzverhalten geprüft, insbesondere gemäß üblicher Kennzahlen, wie zum Beispiel Accuracy oder Loss und ein optimales Modell auf dem Validation Set genutzt wird.

Auch kann eine automatisierte Evaluation gegen ein unabhängiges Test-Set erfolgen. Hierzu kann ein Test-Split auf Szenario-Ebene der 3D-Szenarien erfolgen, die Testergebnisse verschiedener Modellversionen, beispielsweise durch Jupyter-Notebooks, exportiert werden und das beste Modell auf dem Test-Set ausgewählt werden.

Für das Training ist es weiterhin möglich, bestehende Software-Bibliotheken wie Tensorflow, Torch, Keras oder Caffe zu verwenden.

### Phase D: Deployment der Modelle

Für das gemäß einer Ausführungsform der vorliegenden Erfindung trainierte Modell kann ein flexibles Deployment erfolgen. Das Deployment ist die Bereitstellung der trainierten Modelle für eine spätere Anwendung in o.g. Anwendungsfällen. Das Deployment kann auf unterschiedliche Weise geschehen, indem nur ein Modell zur Ausführung auf verschiedenen Endgeräten (Server, Mobilgeräte, Edge-Gerät, etc.) bereitgestellt wird oder alternativ Modelle in Container mit entsprechender Schnittstelle geliefert werden. Ferner kann auch direkt eine Schnittstelle zur Auswertung von Bild und/oder Video-Daten bereitgestellt werden.

Im Fall eines On Edge-Deployments können Modell-Dateien für Edge-Computing Szenarien erstellt werden. Auch ist es möglich, Modelle zu generieren, die für Edge-Computer optimiert sind, wie beispielsweise Tensorflow Light Modelle. Ferner sind Modelle für Smartphones möglich, wie. iOS kompatible Core ML Modelle.

Für Server-Client Applications (On Premises oder Cloud) ist eine automatische Containerisierung oder auch eine SaaS-Option mit direkter Bereitstellung einer Schnittstelle denkbar.

Obwohl die Erfindung mittels der Figuren und der zugehörigen Beschreibung dargestellt und detailliert beschrieben ist, sind diese Darstellung und die detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend zu verschiedenen Aspekten und/oder Ausführungsformen genannt oder gezeigt sind.

Die Erfindung umfasst ebenfalls einzelne Merkmale in den Figuren, auch wenn sie dort im Zusammenhang mit anderen Merkmalen gezeigt sind und/oder vorstehend nicht genannt sind.

Weiterhin schließen die Ausdrücke "aufweisen", "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

## Patentansprüche

1. Computer-implementiertes Verfahren zum Trainieren eines Modells zur Bilderkennung von computergestützt entwickelten Teilen, mit den Schritten
Bereitstellen von bei der computergestützten Entwicklung eines Teils erzeugten digitalen Abbildungsdaten des Teils,
Verwenden der digitalen Abbildungsdaten zum Erzeugen von Trainingsdaten des Teils und Zuordnen von Labels zu den Trainingsdaten,
Trainieren eines Modells mit den erzeugten und gelabelten Trainingsdaten.

2. Verfahren nach Anspruch 1, wobei die digitalen Abbildungsdaten digital erzeugte Abbilder des Teils, insbesondere CAD-Daten, Konstruktionsdaten und/oder 3D-Daten des Teils, sind.

3. Verfahren nach einem der vorstehenden Ansprüche, wobei das Erzeugen von Trainingsdaten das Rendern von Trainingsbildern, insbesondere das Rendern eines oder mehrerer Bilder und/oder Videos des Teils aufweist.

4. Verfahren nach einem der vorstehenden Ansprüche, wobei das Erzeugen von Trainingsdaten das Einfügen einer Abbildung des Teils in eine oder mehrere Szenen aufweist und/oder das automatisierte Verarbeiten der digitalen Abbildungsdaten aufweist.

5. Verfahren nach Anspruch 4, wobei die Szene eine vorbestimmte Eigenschaft aufweist, wie eine vorbestimmte Umgebung, eine vorbestimmte Beleuchtung, eine vorbestimmten Helligkeit, einen Hintergrund, zusätzliche, gegebenenfalls reflektierende Objekte, eine vorbestimmte Kameraeinstellung, wie Schärfe oder Auflösung, Nebel, Regen, Schnee und/oder Dampf.

6. Verfahren nach einem der vorstehenden Ansprüche, wobei das Erzeugen von Trainingsdaten das Erzeugen einer Abbildung des Teils unter Veränderung von mindestens einem Parameter und/oder einer Eigenschaft, wie einer Farbe, eines Materials und/oder einer Größe aufweist.

7. Verfahren nach einem der vorstehenden Ansprüche, wobei die erzeugte Abbildung des Teils das abgebildete Teil teilverdeckt zeigt.

8. Verfahren nach einem der vorstehenden Ansprüche, wobei das Erzeugen von Trainingsdaten das Verändern der Abbildung des Teils aufweist, insbesondere zur Darstellung einer Veränderung des Normalzustands bzw. Sollzustands des Aufbaus und/oder der Struktur des Teils, wie beispielsweise eine Darstellung einer Beschädigung des Teils, wie einer Delle, eines Kratzers, einer Kerbe, eines Grats, einer Verformung und/oder einer ungleichmäßigen Oberfläche.

9. Verfahren nach einem der vorstehenden Ansprüche, wobei die den Trainingsdaten zugeordneten Labels eine Beschreibung des Teils und/oder dessen Eigenschaften aufweist, wie eine Bezeichnung, eine Identifikationsnummer, die Farbe, das Material und/oder das Vorhandensein einer Veränderung.

10. Verfahren nach einem der vorstehenden Ansprüche, wobei das Trainieren des Modells eine Pipeline, insbesondere unter Verwendung von Transfer-Learning aufweist.

11. Verfahren nach einem der vorstehenden Ansprüche, wobei das Verfahren ferner das Evaluieren des Modells aufweist.

12. Verfahren nach einem der vorstehenden Ansprüche, ferner mit dem Schritt Deployment des trainierten Modells.

13. Verwenden eines durch das Verfahren nach einem der vorstehenden Ansprüche trainierten Modells zum Klassifizieren von Abbildungen des Teils.

14. Verwenden eines durch das Verfahren nach einem der vorstehenden Ansprüche trainierten Modells zum Erkennen des Teils, dessen Position und/oder dessen Eigenschaft auf Bildern.

15. Verwenden eines durch das Verfahren nach einem der vorstehenden Ansprüche trainierten Modells zum Überwachen der Qualität von hergestellten Teilen durch Erkennen einer unregelmäßigen Veränderung, insbesondere einer Beschädigung, deren Positionierung und/oder deren Größe.
